# EUROPÄISCHE PATENTSCHRIFT

(11) **EP 2 761 256 B1**
(45) Veröffentlichungstag und Bekanntmachung des Hinweises auf die Patenterteilung: **02.10.2019**
(21) Anmeldenummer: 12748218.0
(22) Anmeldetag: 16.08.2012
(51) Int. Cl.: G01F 1/58, H01F 27/245

(54) **SPULENSYSTEM EINES MAGNETISCH-INDUKTIVEN DURCHFLUSSMESSGERÄTS**
COIL SYSTEM OF A MAGNETICALLY INDUCTIVE FLOW METER
SYSTÈME À BOBINE POUR UN APPAREIL DE MESURE À INDUCTION MAGNÉTIQUE

(30) Priorität: 27.09.2011 DE 102011083548
(43) Veröffentlichungstag der Anmeldung: 06.08.2014
(73) Patentinhaber: Endress+Hauser Flowtec AG, 4153 Reinach (BL) (CH)
(72) Erfinder: GRAF, Oliver, CH-4447 Känerkinden (CH)
(74) Vertreter: Andres, Angelika Maria
(86) Internationale Anmeldenummer: PCT/EP2012/066033
(87) Internationale Veröffentlichungsnummer: WO 2013/045170

(56) Entgegenhaltungen:
- EP-A1- 1 674 836
- US-A- 2 844 568
- US-A- 3 191 436
- US-A- 4 899 592

## Beschreibung

Die vorliegende Erfindung betrifft ein Spulensystem eines magnetisch-induktiven Durchflussmessgeräts mit einer Spule und mit durch die Spule geführten Kernblechen.

Magnetisch-induktive Durchflussmessgeräte nutzen für die volumetrische Strömungsmessung das Prinzip der elektrodynamischen Induktion aus und sind aus einer Vielzahl von Veröffentlichungen bekannt. Senkrecht zu einem Magnetfeld bewegte Ladungsträger des Mediums induzieren eine Messspannung in im Wesentlichen senkrecht zur Durchflussrichtung des Mediums und senkrecht zur Richtung des Magnetfeldes angeordneten Messelektroden. Die in die Messelektroden induzierte Messspannung ist proportional zu der über den Querschnitt des Messrohres gemittelten Strömungsgeschwindigkeit des Mediums, also proportional zum Volumenstrom. Ist die Dichte des Mediums bekannt, lässt sich der Massestrom in der Rohrleitung bzw. in dem Messrohr bestimmen. Die Messspannung wird üblicherweise über ein Messelektrodenpaar abgegriffen, das bezüglich der Koordinate entlang der Messrohrachse in dem Bereich maximaler Magnetfeldstärke angeordnet ist und wo folglich die maximale Messspannung zu erwarten ist. Die Elektroden sind üblicherweise galvanisch mit dem Medium gekoppelt; es sind jedoch auch magnetisch-induktive Durchflussmessgeräte mit berührungslos kapazitiv koppelnden Elektroden bekannt.

Das Messrohr kann dabei entweder aus einem elektrisch leitfähigen, nichtmagnetischen Material, z.B. Edelstahl, gefertigt sein, oder aus einem elektrisch isolierenden Material bestehen. Ist das Messrohr aus einem elektrisch leitfähigen Material gefertigt, so muss es in dem mit dem Medium in Kontakt kommenden Bereich mit einem Liner aus einem elektrisch isolierenden Material ausgekleidet sein. Der Liner besteht je nach Temperatur und Medium beispielsweise aus einem thermoplastischen, einem duroplastischen oder einem elastomeren Kunststoff. Es sind jedoch auch magnetisch-induktive Durchflussmessgeräte mit einer keramischen Auskleidung bekannt.

Eine Elektrode lässt sich im Wesentlichen in einen Elektrodenkopf, der zumindest teilweise mit einem Medium, welches das Messrohr durchströmt, in Kontakt kommt, und einen Elektrodenschaft, der fast vollständig in der Wandung des Messrohres eingebracht ist, unterteilen.

Die Elektroden sind neben dem Magnetsystem die zentralen Komponenten eines magnetisch-induktiven Durchflussmessgerätes. Bei der Ausgestaltung und Anordnung der Elektroden ist darauf zu achten, dass sie sich möglichst einfach in dem Messrohr montieren lassen und dass nachfolgend im Messbetrieb keine Dichtigkeitsprobleme auftreten; darüber hinaus sollen sich die Elektroden durch eine empfindliche und gleichzeitig störungsarme Messsignalerfassung auszeichnen.

Neben den Messelektroden, die zum Abgriff eines Messsignals dienen, werden oftmals zusätzliche Elektroden in Form von Bezugs- oder Erdungselektroden in das Messrohr eingebaut, die dazu dienen, ein elektrisches Referenzpotential zu messen oder teilgefüllte Messrohre zu erkennen oder die Mediumstemperatur mittels eingebautem Temperaturfühler zu erfassen.

Die US 2 844 678 A offenbart mehrere übereinander geordnete Kernbleche, welche allerdings rechteckig ausgebildet sind. Von der Rechtecksform gehen Arme ab, welche in den Spulen-Innenraum hineinragen.

Die US 3,191,436 A offenbart ebenfalls einen Spulenkern aus mehreren Kernblechen. Auf der einen Seite des Messrohres ist eine größere Spule angeordnet, während auf der diametral gegenüberliegenden Seite zwei Spulen angeordnet sind. Die Kernbleche sind insgesamt U-förmig ausgebildet.

Die Aufgabe der Erfindung besteht darin, ein einfach und kostengünstig herzustellendes magnetisch-induktives Durchflussmessgerät vorzuschlagen.

Die Aufgabe wird gelöst durch den Gegenstand des unabhängigen Anspruchs 1. Weiterbildungen und Ausgestaltungen der Erfindung finden sich in den Merkmalen der jeweils abhängigen Ansprüche wieder.

Die Erfindung lässt zahlreiche Ausführungsformen zu. Einige davon sollen hier kurz anhand der nachfolgenden Figuren näher erläutert werden. Gleiche Elemente sind in den Figuren mit gleichen Bezugszeichen versehen.
- Fig. 1: zeigt perspektivisch ein erfindungsgemäßes Spulensystem eines magnetisch-induktives Durchflussmessgeräts,
- Fig. 2: zeigt das Spulensystem im Querschnitt,
- Fig. 3: zeigt perspektivisch ein erfindungsgemäßes Kernblech,
- Fig. 4: zeigt erfindungsgemäße Schraubhülsen,
- Fig. 5: zeigt ein erfindungsgemäßes magnetisch-induktives Durchflussmessgerät in einer teilgeschnittenen Seitenansicht und im Querschnitt,
- Fig. 6: zeigt ein erfindungsgemäßes magnetisch-induktives Durchflussmessgerät in der Draufsicht,
- Fig. 7: zeigt einen erfindungsgemäßen Polschuh in der Draufsicht,
- Fig. 8: zeigt perspektivisch einen erfindungsgemäßen Haltebügel in Vorder- und Rückansicht,
- Fig. 9: zeigt schematisch die Anordnung von vier Spulen am Messrohr,
- Fig. 10: zeigt modellhaft die Verschaltung der vier Spulen,

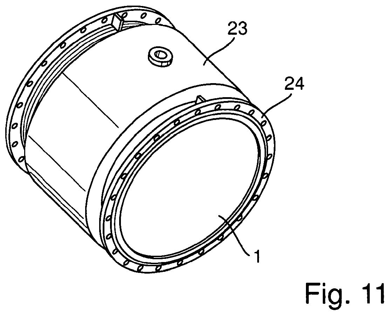

- Fig. 11: zeigt perspektivisch ein erfindungsgemäßes magnetisch-induktives Durchflussmessgerät mit in einem Gehäuse umschlossenen Spulensystemen.

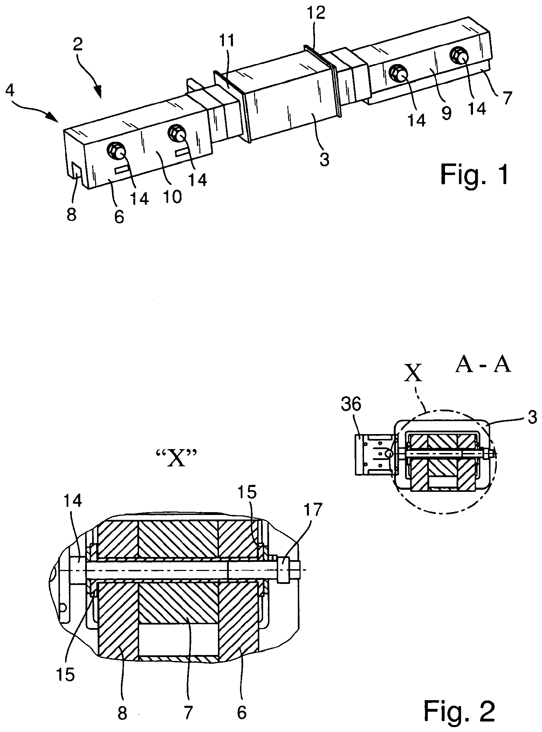

In Fig. 1 ist ein erfindungsgemäßes Spulensystem 2 eines magnetisch-induktiven Durchflussmessgeräts dargestellt. Das Spulensystem 1 umfasst eine Spule 3 und zumindest zwei, insbesondere mehrere, zu mindestens zwei Stapeln angeordnete Kernbleche 6, 7 und 8, welche durch die Spule 3 geführt sind, und welche den Spulenkern 4 der Spule 3 bilden.

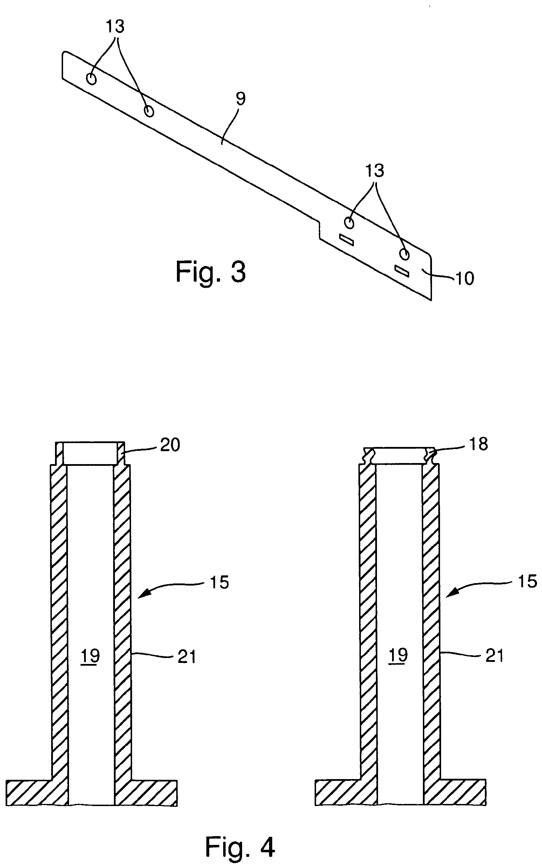

Erfindungsgemäß sind sämtliche Kernbleche 6, 7 und 8 identisch ausgestaltet und weisen somit jeweils gleiche Form und Größe auf. Wie weiter in Fig. 3 anhand eines ersten Kernblechs 6 präsentiert, weist jedes Kernblech 6 einen ersten Schenkel 9 und einen zweiten Schenkel 10 auf, welche L-förmig miteinander verbundenen sind. Analoges gilt natürlich für das zweite Kernblech 7, das dritte Kernblech 8 oder jedes weitere Kernblech. Der erste und zweite Schenkel 9 und 10 schließen beispielsweise einen Winkel von 90° ein.

Weitergebildet weist jedes Kernblech 6 Bohrungen 13 auf, durch welche sie miteinander verschraubt werden. Die Bohrungen 13 sind weiterbildungsgemäß symmetrisch bezogen auf die Länge des ersten Schenkels 9 des Kernblechs 6 angeordnet, so dass bei einem entgegengesetzt orientierten Kernblech, dessen erster Schenkel bündig mit dem ersten Schenkel 9 des Kernblechs 6 abschließt, die beiden ersten Schenkel somit deckungsgleich sind, die Bohrungen deckungsgleich sind, so dass beide Kernbleche miteinander verschraubbar sind. Beim vorliegenden Kernblech 6 sind die Ecken abgerundet, beispielsweise durch Radien der Größe R0,5 bis R10, je nach Größe des Kernblechs. Nicht abgerundet sind jedoch die Beiden Ecken des freien Endes des zweiten Schenkels 10, welches Ende im montierten Zustand des Spulensystems einen Polschuh berührt.

Werden Spannbänder zur Fixierung des Spulensystems am Messrohr verwendet, kann jedes Kernblech, wie hier, weitere Bohrungen, hier mit rechteckigem Querschnitt aufweisen, durch welche die Spannbänder durchgeführt werden, das Spulensystem fest mit dem Messrohr zu verbinden.

Ein erfindungsgemäßes Kernblech umfasst insbesondere ein Metall mit einer magnetischen Permeabilitätszahl µᵣ von zumindest 50, insbesondere mindestens 1000 bis 50000. Es besteht beispielsweise aus M165 oder M330.

Erfindungsgemäß sind das erste Kernblech 6 und das zweites Kernblech 7 so durch die Spule 3 geführt, dass der erste Schenkel 9 des ersten Kernblechs 6 und der erste Schenkel 9 des zweiten Kernblechs 7 parallel zueinander verlaufen. Gemäß der auch hier illustrierten Weiterbildung der Erfindung umfasst das Spulensystem 2 einen Stapel an dritten Kernblechen 8, deren erste Schenkel 7 ebenfalls parallel zu den ersten Schenkeln der ersten und zweiten Kernbleche 6 und 7 verlaufen, wie wiederum in Fig. 1 verdeutlicht.

Erfindungsgemäß verläuft weiterhin der zweite Schenkel 10 des ersten Kernblechs 6 und der zweite Schenkel 10 des zweiten Kernblechs 7 parallel zueinander, wobei der zweite Schenkel 10 des ersten Kernblechs 6 und der zweite Schenkel 10 des zweiten Kernblechs 7 auf unterschiedlichen Seiten 11 und 12 der Spule 3 angeordnet sind.

Weitergebildet zeigt der zweite Schenkel 10 des ersten und gegebenenfalls des dritten Kernblechs 6 und 8 und der zweite Schenkel 10 des zweiten Kernblechs 7 in dieselbe Richtung, so dass die Kernbleche 6, 7 und 8 einen U-förmigen Spulenkern 4 bilden. Das zweite Kernblech 7 ist dabei insbesondere zwischen dem ersten und dem dritten Kernblech 6 und 8 mittig durch die Spule 3 geführt.

Bei der Spule 3 handelt es sich beispielsweise um eine Zylinderspule. Beispielhaft ist sie mit einem rechteckigen oder quadratischen Spulenkern 4 aus Kernblechen 6, 7 und 8 im Querschnitt versehen. Sie umfasst dabei z.B. einen auf einen Spulenkörper aus Kunststoff gewickelten Kupferdraht.

Zwischen Spule 3 und den zweiten Schenkeln 10 der Kernbleche 6, 7 und 8 sind elektrisch isolierende Distanzstücke 16 angeordnet. Dabei handelt es sich insbesondere um Kunststoffringe, beispielsweise aus einem glasfaserverstärktem Thermoplast wie z.B. Polyamid PA66. Distanzstücke 16 werden eingesetzt, um den Abstand der Spule 3 zu den zweiten Schenkeln 10 der Kernbleche 6, 7 und 8 festzulegen und gegebenenfalls, um die Spule 3 mittig zwischen den zweiten Schenkeln 10 der Kernbleche 6, 7 und 8 zu positionieren und festzustellen. So ist es möglich, unterschiedliche Kernbleche mit insbesondere unterschiedlichen Längen ihrer ersten Schenkel mit jeweils der baugleichen Spule einzusetzen. Damit lassen sich mit vielen Gleichteilen wiederum verschieden Große Spulensysteme für verschieden große magnetisch-induktive Durchflussmessgeräte, insbesondere für verschieden große Nennweiten der Messrohre der magnetisch-induktiven Durchflussmessgeräte bauen. Das Messrohr eines erfindungsgemäßen magnetisch-induktiven Durchflussmessgeräts weist insbesondere eine Größe zwischen DN700 und DN2400, insbesondere zwischen DN1350 und DN2400 auf. Mit identischen Bauteilen lassen sich so Spulensysteme beispielsweise für die Nennweiten DN700 bis DN1200 und DN1350 bis DN 2400 herstellen.

Als magnetisch isolierend gilt ein Material mit einer magnetischen Permeabilitätszahl µᵣ kleiner 1, insbesondere nahe 0. Elektrisch isolierend ist ein Werkstoff mit einem spezifischen Widerstand größer 1*10⁻¹⁰ Ωmm²/m, insbesondere größer 1*10⁻¹⁵ Ωmm²/m. Beide Angaben gelten selbstverständlich für Normbedingungen.

Alternativ dazu, dass nicht nur die Bohrungen, sondern auch die ersten Schenkel 9 der Kernbleche 6, 7 und 8 deckungsgleich nebeneinander liegen, sind der erste Schenkel 9 des ersten Kernblechs 6 und der erste Schenkel 9 des zweiten Kernblechs 7 axial zueinander versetzt angeordnet. Dadurch ist eine Länge des Spulensystems parallel zu den ersten Schenkeln 9 der Kernbleche 6 und 7 größer als eine Länge der ersten Schenkeln 9 der Kernbleche 6 und 7. Ihre Enden schließen nicht bündig miteinander ab. Die ersten Schenkel 9 sind nicht deckungsgleich. Bohrungen, insbesondere zumindest zwei, in den Kernblechen jedoch schon, da diese entsprechend dem axialen Versatz der Kernbleche zueinander in den Kernblechen angeordnet sind. Auf ein solches Spulensystem wird in den Figuren nicht weiter eingegangen. Analog sind bei in Stapeln durch die Spule geführten Kernblechen die ersten Schenkel 9 der ersten Kernbleche 6 und die ersten Schenkel 9 der zweiten Kernbleche 7 axial zueinander versetzt angeordnet. Auch damit lassen sich verschieden große Spulensysteme realisieren.

Durch die bereits eingeführten Bohrungen 13 in den Kernblechen 6, 7 und 8 sind die Kernbleche 6, 7 und 8 mittels Schrauben 14 miteinander verschraubt. Die Bohrungen 13 sind in den Kernblechen 6, 7 und 8 so angeordnet, dass im montierten Zustand des Spulensystems 2 die Bohrungen 13 des ersten Kernblechs 6 deckungsgleich sind mit den Bohrungen 13 des zweiten Kernblechs 7, so dass sich das erste und das zweite Kernblech 6 und 7 miteinander durch die Bohrungen 13 verschrauben lassen. Analog ist dann auch das dritte Kernblech 8 verschraubbar, da es deckungsgleich mit dem ersten Kernblech angeordnet ist. Erreicht wird dies durch die Symmetrie der Bohrungen 13 bezogen auf die Länge des ersten Schenkels 9 jedes Kernblechs 6, 7 und 8.

In Fig. 2 ist das Spulensystem 2 aus Fig. 1 quer geschnitten. Die Kernbleche 6, 7 und 8 sind in Stapeln, hier in drei Stapeln, zu jeweils mehreren Kernblechen 6, 7 und 8 durch die Spule 3 geführt. Durch die Öffnung der Spule 3, sind die Kernbleche 6, 7 und 8 in einer solchen Anzahl aneinander anliegend geführt, dass sie zumindest die Breite der Öffnung, insbesondere die Öffnung insgesamt ausfüllen. Die konstruktive Ausgestaltung, insbesondere des ersten Schenkels 9, der Kernbleche 6, 7 und 8 hängt daher von der konstruktiven Gestalt der Spule 3 ab und umgekehrt. Die Anzahl der durch die Spule 3 geführten Kernbleche 6, 7 und 8 ist ebenfalls davon abhängig.

Die Schrauben 14 sind dabei gemäß einer Ausführungsform mittels Schraubhülsen 15 von den Kernblechen 6, 7 und 8 elektrisch und/oder magnetisch isoliert.

Im veranschaulichten Beispiel, sind zwei sich gegenüberstehende Schraubhülsen 15 mittels der Schraubverbindung, hier aus Schraube 14 und Mutter 17, so gegeneinander vorgespannt, dass sich zumindest eine Schraubhülse 15 um ein vorgegebenes Maß axial verkürzt, wobei sie zumindest teilweise die Form eines Faltenbalgs annimmt. Zur Isolierung verhindern die Schraubhülsen 15 den Kontakt der Kernbleche 6, 7 und 8 mit den Schrauben 14. Um Toleranzen beispielsweise der Dicke des Kernblechstapels auszugleichen, sind die Schraubhülsen 15 dabei so ausgestaltet, dass die Summe ihrer Längen im nichtmontierten Zustand, welche im montierten Zustand im Kernblechstapel liegen, die Dicke des Kernblechstapels um ein vorgegebenes Maß überschreitet. Das vorgegebene Maß ist dabei kleiner als die größtmögliche axiale Stauchung der Schraubhülsen 15, ohne dass diese außerhalb der erfindungsgemäßen Parameter verformt werden.

Bei der Montage werden die Schraubhülsen 15 von beiden Seiten in den Kernblechstapel eingeführt. Ihre ringförmigen Spitzen berühren sich dabei. Wird nun eine Schraube 14 durch die Schraubhülsen 15 gesteckt und verschraubt, wird über den Schraubenkopf eine axial wirkende Kraft in die Schraubhülsen 15 geleitet, die dazu führt, dass sich zumindest eine der Schraubhülsen 15 erfindungsgemäß verformt, bis der Schraubenkopf anliegt und die Summe der Längen der Schraubhülsen 15 im Kernblechstapel der Dicke des Kernblechstapels entspricht.

Selbstverständlich wäre dies auch durch andere Maßnahmen zu erreichen, beispielsweise durch nichtleitende Schrauben oder Schraubhülsen mit ineinandergreifenden Ringen an ihren Spitzen, wobei ein erster Ring einen Innendurchmesser aufweist, welcher größer oder gleich groß ist dem schraubenführenden Bereich der Schraubhülse und einen Außendurchmesser aufweist, welcher kleiner ist als der des schraubenführenden Bereichs der Schraubhülse, wobei der zweite Ring dann einen Innendurchmesser aufweist, welcher größer oder gleich groß ist dem Außendurchmesser des ersten Rings und einen Außendurchmesser aufweist, welcher kleiner oder gleich groß ist als der des schraubenführenden Bereichs der Schraubhülse.

Ein Vorteil der Erfindung gegenüber diesen Lösungen ist jedoch, dass die Schraubhülse 15 einfacher und kostengüstiger herzustellen ist.

Solche Schraubhülsen 15 zur elektrischen und/oder magnetischen Isolierung von Schrauben sind in Fig. 4 dargestellt; links im Zustand nach der Herstellung, rechts mit einem Bereich, der die Form eines Faltenbalgs 18 angenommen hat. Die Schraubhülse 15 weist eine Bohrung 19 zur Aufnahme und Führung der Schraube auf. Diese weist zur Führung der Schraube in einem dazu vorgesehenen Bereich 21 der Schraubhülse 15 einen über die Länge des Bereichs 21 konstanten Innendurchmesser auf, welcher durch die Bohrung 19 festgelegt ist.

Die Schraubhülse 15 ist weiterbildungsgemäß so ausgestaltet, dass sie sich bei einer axial auf sie einwirkenden Kraft vorgegebener Größe um ein vorgegebenes Maß axial verkürzt, wobei sie zumindest teilweise die Form eines Faltenbalgs 18 annimmt. Im skizzierten Ausführungsbeispiel weist die Schraubhülse 15 an ihrer Spitze einen Bereich mit einer verringerten Wandstärke aufweist, welcher bei einer axial auf ihn einwirkenden Kraft vorgegebener Größe die Form eines Faltenbalgs 18 annimmt und sich somit ein vorgegebenes Maß axial verkürzt. Im gezeigten Ausführungsbeispiel handelt es sich bei dem Bereich mit verringerter Wandstärke um einen Ring 20 auf der Spitze der Schraubhülse 15. Der Ring 20 weist einen größeren Innendurchmesser und einen geringeren Außendurchmesser als die Schraubhülse 15 in einem Bereich 21 zur Führung der Schraube auf. Die Schraubhülse 15 ist somit im Bereich des Rings 20 nicht geeignet zur Führung der Schraube.

Wird die Schraubhülse 15 mit einer Kraft axial beaufschlagt, welche eine vorgegebene Größe aufweist oder übersteigt, so wird der Ring 20 in der Art deformiert, dass er die Form eines Faltenbalgs 18 annimmt.

Die Länge des Bereichs mit der verringerten Wandstärke, also hier des Rings 20, ist gemäß einer Ausführungsform der Erfindung klein im Vergleich mit der axialen Länge des Bereichs 21 der Schraubhülse 15 zur Führung der Schraube.

Nimmt die Schraubehülse 15 teilweise die Form eines Faltenbalgs 18 an, so weist, gemäß einer weiteren Weiterbildung der erfindungsgemäßen Schraubhülse, der Faltenbalg einen geringeren Außendurchmesser auf als die Schraubhülse 15 in einem Bereich 21 zur Führung der Schraube. Werden beispielsweise zumindest zwei mit einer Schraube zu verschraubende und von der Schraube zu isolierende Bleche miteinander verschraubt, so werden diese Bleche nicht zueinander radial zur Schraubenhülse dadurch verschoben, dass die Schraubenhülse derart deformiert ist, dass sie eine Kraft radial zur Schraubenhülse auf eines der Bleche durch ihre Verformung aufbringt, welche ihren sonstigen Außendurchmesser überragt.

Eine weiterbildungsgemäße Schraubenhülse umfasst insbesondere einen Polymerwerkstoff, wie z.B Polyethersulfon. Alternative Materialien sind beispielsweise Polyetaetaketon oder Polyphenülensulfid. Die Schraubhülsen sind somit elektrisch und gegebenenfalls magnetisch isolierend.

Natürlich sind die Schraubhülsen, wie auch die Schraubhülsen des Stands der Technik, zu einem gewissen Maße axial elastisch verformbar. Das Maß ist insbesondere abhängig von eingeleiteter Kraft, Werkstoff und Wandstärke der Schraubhülse.

Die erfindungsgemäße Verformung der Schraubhülse 15 zu einem Faltenbalg ist dabei elastisch oder teilweise plastisch.

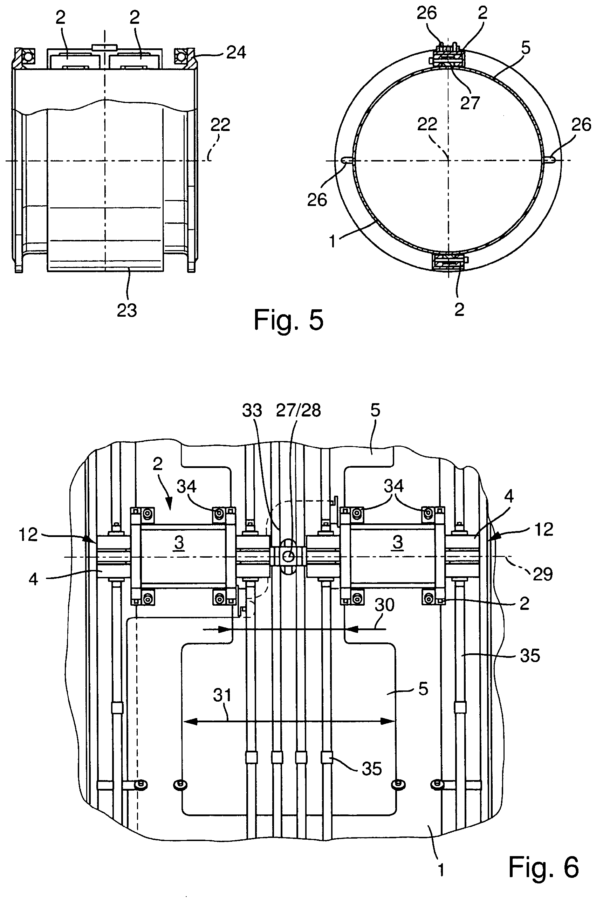

Fig. 5 zeigt nun ein erfindungsgemäßes magnetisch-induktives Durchflussmessgerät, welches ein Messrohr 1 und zumindest ein erfindungemäßes Spulensystem 2 umfasst, von der Seite in einem Teilschnitt und in einem Querschnitt. Die Spulensysteme 2 sind dabei von einem sie umschließenden Gehäuse 23 gekapselt. Dennoch weist das Gehäuse 23 eine geringe Bauhöhe auf - ein weiterer Vorteil der Erfindung. Gemäß einer weiteren Weiterbildung der Erfindung weisen die Spulensysteme 2 eine geringere Höhe in radialer Richtung des Messrohrs 1 auf, als Flansche 24 des Messrohrs 1. Lediglich eine Vorrichtung zum Anschluss eines Messumformers 26 kann darüber hinausragen. Die Vorrichtung 26 umfasst dabei auch Durchführungen zur Kontaktierung der Spulensysteme und der Elektroden.

Die Spulensysteme 2 sind insbesondere so auf dem Messrohr 1 angeordnet, dass die zweiten Schenkel der Kernbleche zum Messrohr 1 zeigen. Messelektroden 26, eine so genannte Messstoffüberwachungselektrode 27 und eine Referenzelektrode 28 ragen in das Messrohr 1 dieses Beispiels hinein.

In Fig. 6 ist ein weiterbildungsgemäßes magnetisch-induktives Durchflussmessgerät mit einem Messrohr 1 und darauf angeordneten Spulensystemen 2 in der Draufsicht dargestellt. Jedes Spulensystem 2 weist eine Spule 3 und einen durch die Spule 3 geführten Spulenkern 4 auf. Weiterbildungsgemäß ragt der Spulenkern 4 aus zumindest einer Stirnseite 11 der Spule 3 heraus. In diesem Ausführungsbeispiel ragt der Spulenkern 4, welcher hier mehrere Kernbleche umfasst, aus beiden Stirnseiten 11 und 12 der Spule 3 symmetrisch heraus. Die Kernbleche sind L-förmig geformt und so zueinander ausgerichtet, dass in einem Längsschnitt durch das Spulensystem ein U-förmiger Spulenkern ausgebildet wird.

Zwei Spulensysteme 2 sind dabei so in einer Linie 29 parallel zu einer Längsachse des Messrohrs auf dem Messrohr 1 angeordnet, dass ein Polschuh 5 zwischen den aus den Spulensystemen 2 herausragenden Spulenkernen 4 und dem Messrohr 1 angeordnet ist.

Die Spulen 3 umfassen beispielsweise einen helixförmig auf einen hohlzylindrischen Spulenkörper aus einem Polymer gewickelten Kupferdraht. Die zwei Spulensysteme weisen dieselbe Längsachse 29 auf, welche insbesondere parallel zu einer Längsachse des Messrohrs verläuft.

Weiterhin ist der Figur zu entnehmen, dass der Polschuh 5 eine erste Breite 30 parallel zur Längsachse des Messrohrs 1 aufweist, welche kleiner oder gleich groß ist einem Abstand der zwei Spulen 3 zueinander. Der Polschuh 5 ist dabei so auf dem Messrohr 1 angeordnet und zu den Spulen 3 ausgerichtet, dass sich die erste Breite 30 im Bereich der Spulen 3 der zwei Spulensysteme 2 befindet. Die zwei Spulen 3 stehen sich so gegenüber, dass der Polschuh 5 zwischen ihnen, insbesondere zwischen ihren beiden sich gegenüberstehenden Stirnflächen 11, liegt. Der Abstand der zwei Spulen 3 bemisst sich somit zwischen den zwei sich gegenüberliegenden Stirnflächen 11 der Spulen. Ansonsten weist der Polschuh 5 eine zweite Breite 31 parallel zur Längsachse des Messrohrs 1 auf, welche größer ist als der Abstand der zwei sich gegenüberliegenden Stirnflächen 11 der Spulen 3. Allgemein umschließt der Polschuh 5 das Messrohr 1 zumindest teilweise.

Der Bereich der verringerten ersten Breite 30 des Polschuhs 5 erstreckt sich dabei über die Breite des Spulenkerns 4, insbesondere über die gesamte Breite der Spulen 3, senkrecht zur Längsachse 29 der Spulensysteme 2, welche auf der Linie ihrer Längsachsen 29 liegen. Im gezeigten Ausführungsbeispiel ist der Bereich der verringerten ersten Breite 30 des Polschuhs 5 breiter als die Breite der Spulensysteme 2.

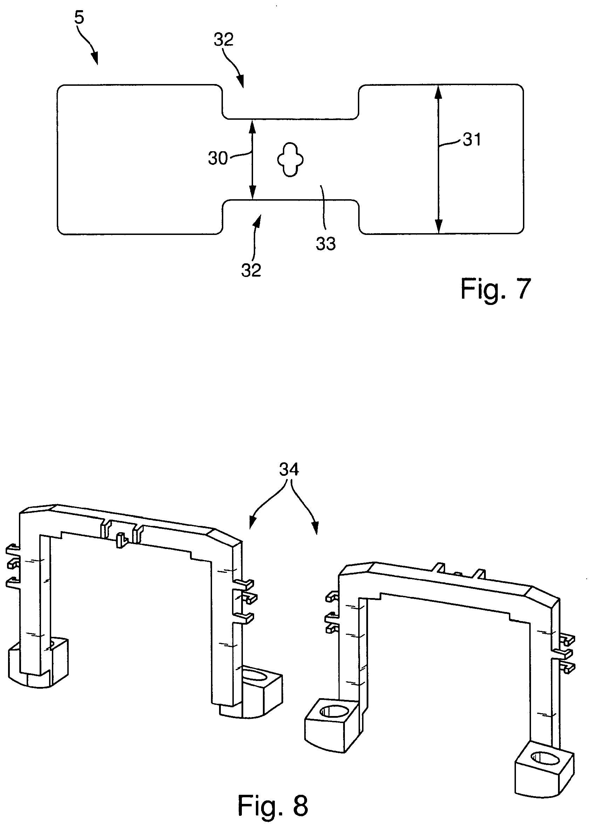

Ein weitergebildeter Polschuh 5 ist in Fig. 7 in die Zeichenebene projiziert. Er weist eine Länge und eine zweite Breite 31 auf. Des Weiteren weist er die Form einer einfach gekrümmten Schale auf. In der Draufsicht, projiziert auf die Zeichenebene also, weist der Polschuh 5, abgesehen von den abgerundeten Ecken und von den Aussparungen 32, quasi rechteckigen Querschnitt auf. Die Aussparungen 32 sind symmetrisch und führen zur ersten Breite 30 im Bereich der Aussparungen 32. Alternative Ausgestaltungen sind denkbar, beispielsweise als Doppelkeule in der Draufsicht. Des Weiteren weist der Polschuh 5 eine Bohrung 33 auf, zur Durchführung einer Elektrode, insbesondere einer Messstoffüberwachungselektrode oder einer Bezugselektrode.

Wird, wie in Fig. 6 zu sehen, das magnetisch-induktive Durchflussmessgerät in eine Ebene projiziert, welche parallel zur Messrohrachse verläuft und senkrecht zu einer weiteren Ebene, in welcher die Messrohrachse und die Längsachsen 29 der Spulen 3 liegen, überdecken, gemäß einer Ausführungsform der Erfindung, ausschließlich die Spulenkerne 4 der Spulen 3 den Polschuh 5. Wie oben bereits erwähnt, wird der Polschuh von einem oder mehreren Spulensystemen 2 jedoch nur von den zweiten Schenkeln der ersten und dritten Kernbleche bzw. von den zweiten Schenkeln der Kernbleche des ersten und dritten Kernblechstapels berührt.

In Fig. 8 ist ein Haltebügel 34 perspektivisch in zwei Ansichten gezeichnet. Mit dem Haltebügel 34 wird ein Spulensystem auf dem Messrohr positioniert. Um vier Spulensysteme am Messrohr zu positionieren, werden z.B. acht Haltebügel 34 genutzt, zwei für jedes Spulensystem. Dennoch handelt es sich um acht Gleichteile.

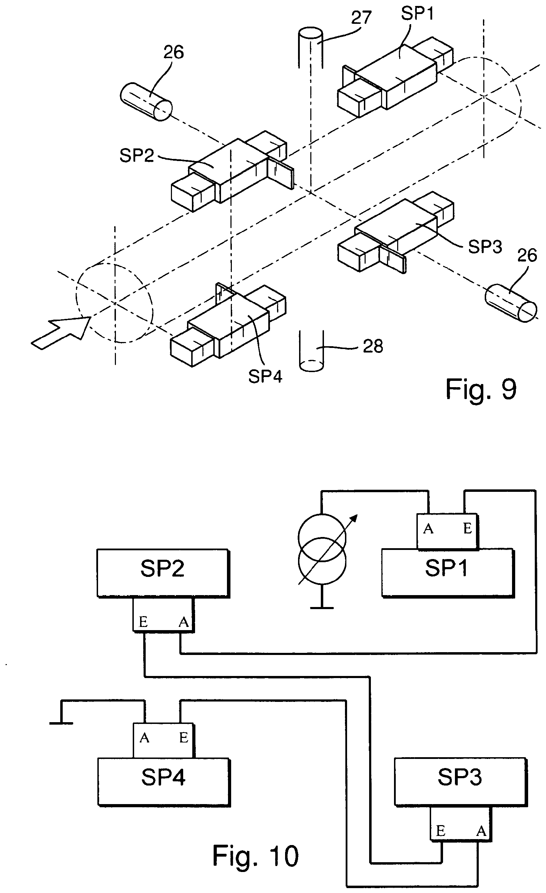

Fig. 9 und Fig. 10 zeigen ein magnetisch-induktives Durchflussgerät mit der beschriebenen Lage der Spulensysteme und der Verschaltung ihrer Spulen. Da die Spulen identisch sind, lässt sich ihre Lage und Verschaltung auch an den schematisch skizzierten Anschlussfahnen zu ihrem elektrischen Anschluss erkennen. A steht dabei für den Anfang der Wicklung einer Spule und E für das Ende. Mit SP1, SP2, SP3 und SP4 sind die vier Spulensysteme gekennzeichnet. Neben den zwei Messelektroden sind zwei weitere Elektroden in der Messrohrwand vorgesehen. Die Messelektroden liegen in einer Linie senkrecht zur Messrohrachse in einer Ebenen mit dieser und senkrecht zur Ebene, welche von den Längsachsen der Spulensysteme aufgespannt wird. Bei den weiteren Elektroden handelt es sich beispielsweise um eine Messstoffüberwachungselektrode und eine Bezugselektrode. Beide sind jeweils durch eine Bohrung der zwei hier nicht dargestellten Polschuhe zwischen den Spulensystemen geführt. Sie liegen damit in einer Linie senkrecht zur Messrohrachse, in der Ebene der Längsachsen der Spulensysteme. Der schwarze Pfeil deutet die Strömungsrichtung des Durchflusses durch das Messrohr an.

### Bezugszeichenliste

- 1: Messrohr
- 2: Spulensystem
- 3: Spule
- 4: Spulenkern
- 5: Polschuh
- 6: Erstes Kernblech
- 7: Zweites Kernblech
- 8: Drittes Kernblech
- 9: Erster Schenkel
- 10: Zweiter Schenkel
- 11: Erste Stirnfläche
- 12: Zweite Stirnfläche
- 13: Bohrung in den Kernblechen
- 14: Schraube
- 15: Schraubenhülse
- 16: Distanzstück
- 17: Mutter
- 18: Faltenbalg
- 19: Bohrung in der Schraubhülse
- 20: Ring der Schraubhülse
- 21: Bereich der Schraubhülse zur Führung einer Schraube
- 22: Messrohrlängsachse
- 23: Gehäuse
- 24: Flansch
- 25: Vorrichtung zum Anschluss eines Messumformers
- 26: Messelektrode
- 27: Messstoffüberwachungselektrode
- 28: Referenzelektrode
- 29: Längsachse der Spule bzw. des Spulensystems
- 30: Erste Breite des Polschuhs
- 31: Zweite Breite des Polschuhs
- 32: Aussparungen im Polschuh
- 33: Bohrung im Polschuh
- 34: Haltebügel
- 35: Spannband
- 36: Anschlussfahne

## Patentansprüche

1. Spulensystem (2) für ein magnetisch-induktives Durchflussmessgerät mit einer Spule (3) und durch die Spule (3) geführten Kernblechen (6, 7),
**dadurch gekennzeichnet,**
**dass** die Kernbleche (6, 7) gleiche Form und Größe aufweisen, wobei jedes Kernblech (6, 7) einen ersten und einen zweiten Schenkel (9, 10) aufweist, welche L-förmig miteinander verbundenen sind, wobei zumindest ein erstes Kernblech (6) und ein zweites Kernblech (7) so durch die Spule (3) geführt sind, dass der erste Schenkel (9) des ersten Kernblechs (6) und der erste Schenkel (9) des zweiten Kernblechs (7) parallel zueinander verlaufen und, dass der zweite Schenkel (10) des ersten Kernblechs (6) und der zweite Schenkel (10) des zweiten Kernblechs (7) parallel zueinander verlaufen, wobei der zweite Schenkel (10) des ersten Kernblechs (6) und der zweite Schenkel (10) des zweiten Kernblechs (7) auf unterschiedlichen Seiten der Spule (3) angeordnet sind,
wobei die Kernbleche (6, 7) in Stapeln zu jeweils mehreren Kernblechen (6, 7) durch die Spule (3) geführt sind.

2. Spulensystem nach Anspruch 1,
**dadurch gekennzeichnet,**
**dass** das Spulensystem zumindest ein drittes Kernblech (8) umfasst,
wobei die zumindest drei Kernbleche (6, 7, 8) so durch die Spule (3) geführt sind, dass die ersten Schenkel (9) der Kernbleche (6, 7, 8) und der zweite Schenkel (10) des ersten und eines dritten Kernblechs (6, 8) und der zweite Schenkel (10) des zweiten Kernblechs (7) einen U-förmigen Spulenkern bilden, wobei das zweite Kernblech (7) zwischen dem ersten und dem dritten Kernblech (8) angeordnet ist, und
wobei der erste Schenkel (9) des dritten Kernblechs (8) parallel zum ersten Schenkel (9) des ersten und des zweiten Kernblechs (6, 7) verläuft und
wobei der zweite Schenkel (10) des dritten Kernblechs (8) parallel zum zweiten Schenkel des ersten und des zweiten Kernblechs (6, 7) verläuft.

3. Spulensystem nach einem der Ansprüche 1 bis 2,
**dadurch gekennzeichnet,**
**dass** die Kernbleche (6, 7) vorgegebene Bohrungen (13) aufweisen, welche so angeordnet sind, dass die Bohrungen (13) des ersten Kernblechs (6) deckungsgleich sind mit den Bohrungen (13) des zweiten Kernblechs (7).

4. Spulensystem nach einem der Ansprüche 1 bis 3,
**dadurch gekennzeichnet,**
**dass** die Kernbleche (6, 7) mittels Schrauben (14) verschraubt sind, wobei die Schrauben (14) mittels nicht leitenden Schraubhülsen (15) von den Kernblechen (6, 7) isoliert sind.

5. Spulensystem nach Anspruch 4,
**dadurch gekennzeichnet,**
**dass** die Schraubhülsen (15) jeweils so ausgestaltet sind, dass sie sich bei einer axial auf sie einwirkenden Kraft vorgegebener Größe um ein vorgegebenes Maß axial verkürzen, wobei sie zumindest teilweise die Form eines Faltenbalgs (18) annehmen.

6. Spulensystem nach einem der Ansprüche 1 bis 5,
**dadurch gekennzeichnet,**
**dass** der erste Schenkel (9) des ersten Kernblechs (6) und der erste Schenkel (9) des zweiten Kernblechs (7) axial zueinander versetzt angeordnet sind und eine Länge des Spulensystems (2) parallel zu den ersten Schenkeln (9) der Kernbleche (6, 7) größer ist als eine Länge der ersten Schenkeln (9) der Kernbleche (6, 7).

7. Spulensystem nach einem der Ansprüche 1 bis 6,
**dadurch gekennzeichnet,**
**dass** zwischen den zweiten Schenkeln (10) der Kernbleche (6, 7) und der Spule (3) Distanzstücke (16) angeordnet sind.

8. Magnetisch-induktives Durchflussmessgerät,
**dadurch gekennzeichnet,**
**dass** es ein Spulensystem (2) nach einem der Ansprüche 1 bis 7 umfasst.

9. Magnetisch-induktives Durchflussmessgerät nach Anspruch 8,
**dadurch gekennzeichnet,**
**dass** es ein Messrohr (1) umfasst, wobei das Spulensystem (2) so auf dem Messrohr (1) angeordnet ist, dass die zweiten Schenkel (10) der Kernbleche (6, 7) zum Messrohr (1) weisen.

10. Magnetisch-induktives Durchflussmessgerät nach einem der Ansprüche 8 oder 9,
**dadurch gekennzeichnet,**
**dass** zwei Spulensysteme (2) auf einer Linie parallel zu einer Längsachse des Messrohrs (1) auf dem Messrohr (1) angeordnet sind, wobei ein Polschuh (5) zwischen den Spulensystemen (2) und dem Messrohr (1) angeordnet ist.

11. Magnetisch-induktives Durchflussmessgerät nach einem der Ansprüche 8 bis 10,
**dadurch gekennzeichnet,**
**dass** ein Polschuh (5) zwischen den zweiten Schenkeln (10) der ersten und dritten Kernbleche (6, 8) und dem Messrohr (1) angeordnet ist.

12. Magnetisch-induktives Durchflussmessgerät nach Anspruch 11,
**dadurch gekennzeichnet,**
**dass** der Polschuh (5) das Messrohr (1) teilweise umschließt, wobei er eine im Bereich des Spulensystems (2) verringerte Breite (30) parallel zu einer Längsachse des Messrohrs (1) aufweist.

13. Magnetisch-induktives Durchflussmessgerät nach einem der Ansprüche 8 bis 12,
**dadurch gekennzeichnet,**
**dass** es einen Haltebügel (34) zur Positionierung des Spulensystems (2) am Messrohr (1) aufweist.

14. Magnetisch-induktives Durchflussmessgerät nach einem der Ansprüche 8 bis 13,
**dadurch gekennzeichnet,**
**dass** das Messrohr (1) eine Größe zwischen DN700 und DN2400, insbesondere zwischen DN1350 und DN2400 aufweist.

## Claims

1. Coil system (2) for an electromagnetic flowmeter with a coil (3) and core laminations (6, 7) guided through the coil (3),
**characterized in that**
the core laminations (6, 7) have the same shape and size, wherein each core lamination (6, 7) has a first and a second leg (9, 10), which are connected to one another in the shape of an "L", wherein at least a first core lamination (6) and a second core lamination (7) are guided through the coil (3) in such a way that the first leg (9) of the first core lamination (6) and the first leg (9) of the second core lamination (7) are parallel to one another and in such a way that the second leg (10) of the first core lamination (6) and the second leg (10) of the second core lamination (7) are parallel to one another, wherein the second leg (10) of the first core lamination (6) and the second leg (10) of the second core lamination (7) are arranged on different sides of the coil (3),
wherein the core laminations (6, 7) are guided through the coil (3) in stacks of several core laminations (6, 7).

2. Coil system as claimed in Claim 1,
**characterized in that**
the coil system comprises at least a third core lamination (8),
wherein the at least three core laminations (6, 7, 8) are guided through the coil (3) in such a way that the first legs (9) of the core laminations (6, 7, 8) and the second leg (10) of the first and of a third core lamination (6, 8) and the second leg (10) of the second core lamination (7) form a U-shaped coil core, wherein the second core lamination (7) is arranged between the first and third core lamination (8), and
wherein the first leg (9) of the third core lamination (8) is parallel to the first leg (9) of the first and the second core lamination (6, 7), and
wherein the second leg (10) of the third core lamination (8) is parallel to the second leg of the first and second core lamination (6, 7).

3. Coil system as claimed in one of the Claims 1 to 2,
**characterized in that**
the core laminations (6, 7) have predefined bores (13), which are arranged in such a way that the bores (13) of the first core lamination (6) correspond to the bores (13) of the second core lamination (7).

4. Coil system as claimed in one of the Claims 1 to 3,
**characterized in that**
the core laminations (6, 7) are screwed together with screws (14), wherein the screws are isolated from the core laminations (6, 7) by non-conductive screw sleeves (15).

5. Coil system as claimed in Claim 4,
**characterized in that**
the screw sleeves (15) are each designed in such a way that they shorten axially by a predefined amount when a force of a predefined size acts on them axially, wherein they at least partially adopt the form of a bellows (18).

6. Coil system as claimed in one of the Claims 1 to 5,
**characterized in that**
the first leg (9) of the first core lamination (6) and the first leg (9) of the second core lamination (7) are arranged in a manner in which they are axially offset in relation to one another, and a length of the coil system (2) parallel to the first legs (9) of the core laminations (6, 7) is greater than a length of the first legs (9) of the core laminations (6, 7).

7. Coil system as claimed in one of the Claims 1 to 6,
**characterized in that**
spacers (16) are arranged between the second legs (10) of the core laminations (6, 7) and the coil (3).

8. Electromagnetic flowmeter
**characterized in that**
it comprises a coil system (2) as claimed in one of the Claims 1 to 7.

9. Electromagnetic flowmeter as claimed in Claim 8,
**characterized in that**
it comprises a measuring tube (1), wherein the coil system (2) is arranged on the measuring tube (1) in such a way that the second legs (10) of the core laminations (6, 7) are oriented towards the measuring tube (1).

10. Electromagnetic flowmeter as claimed in one of the Claims 8 or 9,
**characterized in that**
two coil systems (2) are arranged on a line parallel to a longitudinal axis of the measuring tube (1), wherein a pole piece (5) is arranged between the coil systems (2) and the measuring tube (1).

11. Electromagnetic flowmeter as claimed in one of the Claims 8 to 10,
**characterized in that**
a pole piece (5) is arranged between the second legs (10) of the first and the third core laminations (6, 8) and the measuring tube (1).

12. Electromagnetic flowmeter as claimed in Claim 11,
**characterized in that**
the pole piece (5) partially surrounds the measuring tube (1), wherein, in the area of the coil system (2), the pole piece has a reduced width (30) parallel to a longitudinal axis of the measuring tube (1).

13. Electromagnetic flowmeter as claimed in one of the Claims 8 to 12,
**characterized in that**
it has a retaining bracket (34) to position the coil system (2) on the measuring tube (1).

14. Electromagnetic flowmeter as claimed in one of the Claims 8 to 13,
**characterized in that**
the size of the measuring tube (1) is between DN700 and DN2400, particualrly between DN1350 and DN2400.

## Revendications

1. Système de bobine (2) pour un débitmètre magnéto-inductif avec une bobine (3) et des tôles de noyau (6, 7) guidées à travers la bobine (3),
**caractérisé**
**en ce que** les tôles de noyau (6, 7) présentent la même forme et la même taille, chacune des tôles de noyau (6, 7) présentant un premier et un deuxième côté (9, 10), qui sont reliés entre eux en forme de L, au moins une première tôle de noyau (6) et une deuxième tôle de noyau (7) étant guidées à travers la bobine (3) de telle sorte que le premier côté (9) de la première tôle de noyau (6) et le premier côté (9) de la deuxième tôle de noyau (7) sont parallèles l'un à l'autre, et de telle sorte que le deuxième côté (10) de la première tôle de noyau (6) et le deuxième côté (10) de la deuxième tôle de noyau (7) sont parallèles l'un à l'autre, le deuxième côté (10) de la première tôle de noyau (6) et le deuxième côté (10) de la deuxième tôle de noyau (7) étant disposés sur différents côtés de la bobine (3), les tôles de noyau (6, 7) étant guidées à travers la bobine (3) sous forme de piles, chacune d'entre elle étant composée de plusieurs tôles de noyau (6, 7).

2. Système de bobine selon la revendication 1,
**caractérisé**
**en ce que** le système de bobine comprend au minimum une troisième tôle de noyau (8), les au moins trois tôles de noyau (6, 7, 8) étant guidées à travers la bobine (3) de telle sorte qu'un premier côté (9) des tôles de noyau (6, 7, 8) et le deuxième côté (10) de la première et de la troisième tôle de noyau (6, 8) et le deuxième côté (10) de la deuxième tôle de noyau (7) forment un noyau de bobine en U, la deuxième tôle de noyau (7) étant disposée entre la première et la troisième tôle de noyau (8), et
le premier côté (9) de la troisième tôle de noyau (8) étant parallèle au premier côté (9) de la première et de la deuxième tôle de noyau (6, 7), et
le deuxième côté (10) de la troisième tôle de noyau (8) étant parallèle au deuxième côté de la première et de la deuxième tôle de noyau (6, 7).

3. Système de bobine selon l'une des revendications 1 à 2,
**caractérisé**
**en ce que** les tôles de noyau (6, 7) présentent des trous (13) prédéfinis, lesquels sont disposés de telle sorte que les trous (13) de la première tôle de noyau (6) correspondent avec les trous (13) de la deuxième tôle de noyau (7).

4. Système de bobine selon l'une des revendications 1 à 3,
**caractérisé**
**en ce que** les tôles de noyau (6, 7) sont vissées au moyen de vis (14), les vis étant isolées des tôles de noyau (6, 7) au moyen de douilles filetées (15) non conductrices.

5. Système de bobine selon la revendication 4,
**caractérisé**
**en ce que** les douilles filetées (15) sont chacune conçues de telle sorte qu'elles se raccourcissent axialement d'une dimension prédéfinie en présence d'une force de grandeur prédéfinie, agissant axialement sur celles-ci, les douilles adoptant au moins partiellement la forme d'un soufflet (18).

6. Système de bobine selon l'une des revendications 1 à 5,
**caractérisé**
**en ce que** le premier côté (9) de la première tôle de noyau (6) et le premier côté (9) de la deuxième tôle de noyau (7) sont disposés de manière décalée axialement l'un par rapport à l'autre, et une longueur du système de bobine (2) parallèle aux premiers côtés (9) des tôles de noyau (6, 7) est supérieure à une longueur des premiers côtés (9) des tôles de noyau (6, 7).

7. Système de bobine selon l'une des revendications 1 à 6,
**caractérisé**
**en ce qu'**entre les deuxièmes côtés (10) des tôles de noyau (6, 7) et de la bobine (3) sont disposées des pièces d'écartement (16).

8. Débitmètre magnéto-inductif
**caractérisé**
**en ce qu'**il comprend un système de bobine (2) selon l'une des revendications 1 à 7.

9. Débitmètre magnéto-inductif selon la revendication 8,
**caractérisé**
**en ce qu'**il comprend un tube de mesure (1) ; le système de mesure (2) étant disposé sur le tube de mesure (1) de telle sorte que les deuxièmes côtés (10) des tôles de noyau (6, 7) sont orientés vers le tube de mesure (1).

10. Débitmètre magnéto-inductif selon l'une des revendications 8 à 9,
**caractérisé**
**en ce que** sont disposés, sur le tube de mesure (1), deux systèmes de bobine (2) sur une ligne parallèle à un axe longitudinal du tube de mesure (1), une pièce polaire (5) étant disposée entre les systèmes de bobine (2) et le tube de mesure (1).

11. Débitmètre magnéto-inductif selon l'une des revendications 8 à 10,
**caractérisé**
**en ce qu'**est disposée une pièce polaire (5) entre les deuxièmes côtés (10) de la première et de la troisième tôle de noyau (6, 8) et le tube de mesure (1).

12. Débitmètre magnéto-inductif selon la revendication 11,
**caractérisé**
**en ce que** la pièce polaire (5) entoure partiellement le tube de mesure (1), la pièce polaire présentant, dans la zone du système de bobine (2), une largeur réduite (30) parallèlement à un axe longitudinal du tube de mesure (1).

13. Débitmètre magnéto-inductif selon l'une des revendications 8 à 12,
**caractérisé**
**en ce qu'**il comporte un étrier de maintien (34) pour le positionnement du système de bobine (2) sur le tube de mesure (1).

14. Débitmètre magnéto-inductif selon l'une des revendications 8 à 13,
**caractérisé**
**en ce que** le tube de mesure (1) présente un diamètre nominal compris entre DN700 et DN2400, notamment compris entre DN1350 et DN2400.
